(19) Europäisches Patentamt
European Patent Office
Office européen des brevets

(11) EP 2 131 441 B1

(12) **EUROPEAN PATENT SPECIFICATION**

(45) Date of publication and mention of the grant of the patent:
**12.12.2018 Bulletin 2018/50**

(21) Application number: **08722496.0**

(22) Date of filing: **19.03.2008**

(51) Int Cl.:
***H01G 9/20*** (2006.01) ***H01M 2/22*** (2006.01)

(86) International application number:
**PCT/JP2008/055121**

(87) International publication number:
**WO 2008/114825 (25.09.2008 Gazette 2008/39)**

# (54) DYE-SENSITIZED SOLAR CELL MODULE AND METHOD FOR MANUFACTURING THE SAME

FARBSTOFFSENSIBILISIERTES SOLARZELLENMODUL UND VERFAHREN ZU SEINER HERSTELLUNG

MODULE DE CELLULES SOLAIRES À COLORANT PHOTOSENSIBLE ET SON PROCÉDÉ DE FABRICATION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **20.03.2007 JP 2007073020**

(43) Date of publication of application:
**09.12.2009 Bulletin 2009/50**

(73) Proprietor: **Sharp Kabushiki Kaisha**
**Osaka-shi, Osaka 545-8522 (JP)**

(72) Inventors:
- **FUKUI Atsushi**
  **c/o Sharp Kabushiki Kaisha**
  **Osaka-shi**
  **Osaka 545-8522 (JP)**
- **FUKE, Nobuhiro**
  **c/o Sharp Kabushiki Kaisha**
  **Osaka-shi**
  **Osaka 545-8522 (JP)**
- **KOMIYA, Ryoichi**
  **c/o Sharp Kabushiki Kaisha**
  **Osaka-shi**
  **Osaka 545-8522 (JP)**
- **YAMANAKA, Ryohsuke**
  **c/o Sharp Kabushiki Kaisha**
  **Osaka-shi**
  **Osaka 545-8522 (JP)**
- **HAN, Liyuan**
  **c/o Sharp Kabushiki Kaisha**
  **Osaka-shi**
  **Osaka 545-8522 (JP)**

(74) Representative: **Müller Hoffmann & Partner**
**Patentanwälte mbB**
**St.-Martin-Strasse 58**
**81541 München (DE)**

(56) References cited:
**JP-A- 2003 297 158**
**JP-A- 2004 303 463**
**JP-A- 2006 134 870**
**JP-A- 2006 196 330**
**JP-A- 2006 278 112**
**JP-A- 2006 302 907**
**JP-A- 2007 026 713**
**KR-B1- 100 654 103**
**US-A1- 2005 199 279**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

TECHNICAL FIELD

The present invention relates to a dye-sensitized solar cell module and a method for producing the same.

BACKGROUND ART

As an energy source in place of fossil fuel, solar cells capable of converting sun light to electric power have drawn attention. Presently, some of solar cells using crystalline silicon substrates and thin film silicon solar cells have been used practically. However, the former has a problem of a high production cost of the silicon substrates, and the latter has a problem that the production cost is increased since various kinds of gases for semiconductor production and complicated production facilities are required. Therefore, in both solar cells, it has been tried to lower the cost per electric power output by increasing the efficiency of photoelectric conversion; however, the above-mentioned problems still remain while being unsolved.

As a new type solar cell, there has been proposed a wet type solar cell based on photo-induced electron transfer of a metal complex (see Japanese Patent No. 2664194: Patent Document 1).

This wet type solar cell comprises: two glass substrates each of which has an electrode formed on a surface thereof; and a photoelectric conversion layer which contains a photoelectric conversion material having an absorption spectrum in a visible light region by adsorbing a metal complex as a photo-sensitive dye and an electrolytic material and which is sandwiched between the electrodes of the two glass substrates. When the wet type solar cell is irradiated with light, electrons are generated in the photoelectric conversion layer, the generated electrons are transferred to the electrodes through an external electric circuit, and the transferred electrons are conveyed to the electrodes opposed owing to the ion in the electrolytic material and turn back to the photoelectric conversion layer. Owing to the series of the flow of the electrons, electric energy is outputted.

However, since the basic structure of the dye-sensitized solar cell described in Patent Document 1 is a structure in which an electrolytic solution is injected between the opposed transparent conductive film-bearing glass substrates, it is possible to produce a trial solar cell with a small surface area, but it is difficult to practically produce a solar cell with a large surface area such as 1 m square. That is, if one solar cell is enlarged in the surface area, the generated current is increased in proportion to the area. However, since a voltage decrease in the plane direction of the transparent conductive film to be used for the electrode parts is increased, the inner resistance in series of the solar cell is increased. As a result, out of current-voltage characteristics, FF (fill-factor) and a short circuit current at the time of the photoelectric conversion are lowered, resulting in a problem of decrease of the photoelectric conversion efficiency.

In order to solve the above-described problem, therefore, there has been proposed a dye-sensitized solar cell module in which a counter electrode of one of neighboring dye-sensitized solar cells (electric power generation units) and a conductive layer of the other are electrically conducted through a counter electrode material or a conductive connection layer itself, and thereby a plurality of electric power generation units are connected in series and integrated. Specific examples of such a dye-sensitized solar cell module include a photovoltaic cell in which a back electrode as an anode and a photoelectrode as a cathode are connected through an interlayer disposed between transparent conductive materials (Japanese Unexamined Patent Publication No. HEI 11(1999)-514787: Patent Document 2); and a photoelectric conversion module in which a counter electrode member and a transparent conductive member are connected through a conduction means (Japanese Unexamined Patent Publication No. 2001-357897: Patent Document 3).

In these dye-sensitized solar cell modules, the current to be outputted is equal to the current of one electric power generation unit, but the voltage is boosted according to the number of electric power generation units connected in series.

In addition, there is disclosed a dye-sensitized solar cell module (photoelectric conversion element) in which a linear or grid electrode (metal lead) is provided on a transparent conductive layer by using a low-resistance material such as a metal to supplement conductivity of the transparent conductive layer (Japanese Unexamined Patent Publication No. 2000-285977: Patent Document 4).

In this dye-sensitized solar cell module, a large current is obtained, but the voltage is equal to the voltage of one electric power generation unit.

KR 100 654 103 B1 discloses that a platinum relative electrode is used in a dye-sensitized solar cell. Upper and lower transparent substrates are prepared. A conductive transparent electrode is formed on the inner surface of the upper transparent substrate. A porous cathodic electrode is formed on the conductive transparent electrode, wherein dye is absorbed to the surface of the porous cathodic electrode. A relative electrode is formed in a thin film type on the lower transparent substrate, made of a carbon nano-tube layer as an anodic part corresponding to the cathode electrode. A unit dye-sensitized solar cell has electrolyte filled between the cathode electrode and the relative electrode. A plurality of unit dye-sensitized solar cells are connected in series or parallel to constitute a dye-sensitized solar cell module by

using a connection electrode and a grid electrode that are made of carbon nano-tube electrodes having electrical conductivity of 1-10^4 ohm^-1centimeter^-1.

Patent Document 1: Japanese Patent No. 2664194
Patent Document 2: Japanese Unexamined Patent Publication No. HEI 11(1999)-514787
Patent Document 3: Japanese Unexamined Patent Publication No. 2001-357897
Patent Document 4: Japanese Unexamined Patent Publication No. 2000-285977

DISCLOSURE OF THE INVENTION

Problems that the Invention it to Solve

Generally, integrated dye-sensitized solar cell modules need barrier ribs for dividing neighboring dye-sensitized solar cells (may be referred to as "unit cells" or "electric power generation units"). Since an electric power generation area is wasted in a part where such barrier ribs contact with a light receiving face, there has been an object to improve an electric power generation area rate (= area of porous semiconductor layer in dye-sensitized solar cell module / aperture area of dye-sensitized solar cell module).

In order to improve the electric power generation area rate of a dye-sensitized solar cell module, it is necessary to lengthen a length Y of a porous semiconductor layer in a direction of serial connection (see FIG. 1). However, when a generated current per unit area of the dye-sensitized solar cell is as large as approximately 15 mA/cm$^2$ to 25 mA/cm$^2$, and Y is 1 cm or more for a resistance value (8 Ω/sq to 15 Ω/sq as sheet resistance value) of presently used transparent conductive layers, a voltage decrease will be increased and performance, in particular, fill-factor (FF) in the solar cell will be rapidly decreased.

Therefore, it is an object of the present invention to provide a dye-sensitized solar cell module having high conversion efficiency in which the electric power generation area rate is improved and the voltage decrease is reduced, and to provide a method for producing the dye-sensitized solar cell module.

Means for Solving the Problems

The above problems are solved by the claimed subject-matter.

Effects of the Invention

The present invention can provide a dye-sensitized solar cell module having high conversion efficiency in which an electric power generation area rate is improved and a voltage decrease is reduced, and a method for producing the dye-sensitized solar cell module.

BEST MODES FOR CARRYING OUT THE INVENTION

A dye-sensitized solar cell module (hereinafter, may be referred to as "module") of the present invention comprises: at least two dye-sensitized solar cells each formed by layering, on a light transmitting substrate, a transparent conductive layer, a grid electrode, a photoelectric conversion layer in which a dye is adsorbed in a porous semiconductor layer and the porous semiconductor layer is filled with a carrier transporting material, and a counter electrode, the at least two dye-sensitized solar cells being arranged on the same light transmitting substrate via an inter-cell insulating layer, one dye-sensitized solar cell and its neighboring dye-sensitized solar cell being connected in series via a connection layer.

In order to improve the electric power generation area rate of an integrated module such as the module of the present invention, it is necessary to lengthen the length Y of the porous semiconductor layer in the direction of serial connection. However, when a generated current per length X (= $I_{SC}$ / X) of the porous semiconductor layer in a direction perpendicular to the direction of serial connection of one dye-sensitized solar cell is large, that is, when the current value that is collected is large, lengthening of Y may significantly decrease performance. Therefore, the grid electrode is preferably disposed in the direction of serial connection (Y direction) of the dye-sensitized solar cell to prevent decrease of FF (see FIG. 1).

Therefore, the dye-sensitized solar cell in the module of the present invention produces a significant effect when satisfying the relationship of the following formula:

$$I_{SC}\,[mA]\ /\ X\,[cm] \geq 30\,[mA/cm]$$

wherein Isc is a current [mA] generated at the time of short-circuit of one dye-sensitized solar cell, and X is a length [cm] of the porous semiconductor layer in a direction perpendicular to the direction in which the dye-sensitized solar cell is connected in series.

The shape of the grid electrode of the dye-sensitized solar cell in the module of the present invention is not particularly limited, but preferably, it is an interdigital shape in which the grid electrode extends from the connection layer.

The above-described dye-sensitized solar cell having an interdigital shape preferably satisfies the relationship of the following formula:

$$0.001 < (1\ /\ 2n)\ I_{SC} \cdot R \cdot \eta < 0.03$$

wherein Isc is a current [mA] generated at the time of short-circuit of one dye-sensitized solar cell, R is a resistance value (Ω) per grid electrode having an interdigital shape, η is (area of porous semiconductor layer in one dye-sensitized solar cell) / (aperture area of one dye-sensitized solar cell), and n is the number of grid electrodes having an interdigital shape included in one dye-sensitized solar cell.

Here, n represents the number of units included in one dye-sensitized solar cell, that is, the number of regions surrounded by a distance (disposing cycle) Lx [cm] between grid electrodes and the length Y [cm] of the porous semiconductor layer in the direction of serial connection.

The above-described ((1 / 2n) $I_{SC} \cdot R \cdot \eta$) will be expressed as "E".

E represents an amount of voltage decrease in a grid electrode part. It is not preferable that E is more than 0.03, because in this case, the voltage decrease in the grid electrode part cannot be ignored and performance decreases. In addition, it is not preferable that E is less than 0.001, because in this case, a width W of the grid electrode is larger and the resistance value R of the grid electrode is smaller to decrease the light receiving area rate η, causing decrease of a generated current, and consequently, decrease of performance.

The module of the present invention has the grid electrode of the dye-sensitized solar cell in an interdigital shape extending from the connection layer owing to trade-off of the light receiving area rate (or electric power generation area rate) and the amount of voltage decrease, and produces a more significant effect when satisfying the following conditions:

(1) The length Ly of the grid electrode having an interdigital shape in the direction in which the dye-sensitized solar cells are connected in series is in a range of 2 cm to 10 cm, preferably, 2 cm to 8 cm.
(2) The distance (disposing cycle) Lx between grid electrodes having an interdigital shape is in a range of 0.4 cm to 1.5 cm.
(3) The width W of the grid electrode having an interdigital shape is in a range of 0.1 mm to 1 mm.
(4) The distance between one dye-sensitized solar cell and its neighboring dye-sensitized solar cell, that is, the width between porous semiconductor layers in those dye-sensitized solar cells is in a range of 0.3 mm to 3 mm.

The inventors of the present invention arrived at a voltage decrease parameter as follows.

In one cell of a module of FIG. 1,
the width of the porous semiconductor layer (length in the direction perpendicular to the direction of serial connection) = X,
the length of the porous semiconductor layer (length in the direction of serial connection) = Y,
the distance between grid electrodes (disposing cycle) = Lx,
the length of the grid electrode = Ly,
the width of the grid electrode = W,
and then, an area of the porous semiconductor layer of one solar cell = width × length = XY.

Here, when Y = Ly, the voltage decrease in half the area of one unit (= Lx × Ly) will be considered.

When a current density = Jsc,
the generated current is expressed as I(x, y) = Jsc Δ x Δ y.

Next, a current generated in an area of (Lx / 2) - (W / 2) will be considered.

Integrating I(x, y) in an x-axial direction, the following formula is obtained with respect to a y-axial direction:

$$I(y) = J_{SC}\ (Lx - W)\ /2 \cdot y$$

Next, the voltage decrease will be considered:

(A) resistance = (specific resistance × length) / (width x thickness) = ($\rho$ /W·$T_H$)$\Delta$y
(B) each grid has the length Ly; then R = ($\rho$·Ly) / (W·$T_H$)
(C) defining Lx·Ly as one unit, and assuming each cell has n (pieces of) units; then

$$X \cdot Y = n \cdot Lx \cdot Ly$$

(D) when the current generated in one cell is Isc,

$$I_{SC} = J_{SC} \cdot XY; \text{ then } J_{SC} = I_{SC} / XY = I_{SC} / (n \cdot Lx \cdot Ly)$$

(E) area rate $\eta$ = [(Lx - W) / 2·Ly] / [Lx / 2·Ly] = (Lx - W) / Lx
; therefore,

$$\Delta V(y) = I(y) \cdot R(y)$$

$$= I(y) \cdot \rho \ / \ (W \cdot T_H) \cdot \Delta y$$

$$\Delta V = (1 \ / \ 2n \cdot I_{SC} \cdot \eta \cdot R \cdot 1 \ / \ 2$$

Since the above-described is the voltage decrease amount per half the area of one unit, the voltage decrease per unit is twice the amount.

Therefore, the voltage decrease amount will be:

$$(1 \ / \ 2n \cdot I_{SC} \cdot \eta \cdot R \cdot 1 \ / \ 2) \times 2 = 1 \ / \ 2n \cdot I_{SC} \cdot R \cdot \eta$$

An example of the module of the present invention will be described with reference to the drawings, but the present invention is not limited to the description.

FIG. 1 is (a) a schematic plan view of a light receiving face and (b) a schematic cross sectional view of a joining part in the module of the present invention. Main components of this module are: a transparent conductive layer 2, a photoelectric conversion layer 3, a porous insulating layer 4, a catalyst layer 5, a conductive layer 6, a grid electrode 7, a connection layer 8, an inter-cell insulating layer 9, and a sealing substrate 10 that are formed and disposed on a light transmitting substrate 1. The photoelectric conversion layer 3 is formed by adsorbing a dye in a porous semiconductor layer and filling the porous semiconductor layer with a carrier transporting material. In addition, X and Y represent the length and the width of the porous semiconductor layer in the photoelectric conversion layer, respectively, and Lx, Ly, and W represent the distance (disposing cycle) between grid electrodes, the length of the grid electrode, and the width of the grid electrode, respectively.

(Light transmitting substrate 1)

The light transmitting substrate is not particularly limited as long as it is generally usable for solar cells and it is of a material capable of achieving the effects of the present invention. The material may be a material substantially transmitting light with a wavelength to which a sensitizing dye to be described later has a practically effective sensitivity, and thus the material does not necessarily need to have transmittance to light in the entire wavelength region. It is preferable that the thickness thereof is approximately 0.2 mm to 5 mm.

Examples of such a material include glass substrates such as soda lime float glass, fused quartz glass, and crystalline quartz glass; and transparent polymer sheets.

Examples of the transparent polymer sheets include, for example, tetraacetyl cellulose (TAC), poly(ethylene terephthalate) (PET), poly(phenylene sulfide) (PPS), polycarbonate (PC), polyallylate (PA), poly(ether imide) (PEI), a phenoxy resin and Teflon (registered trademark).

These transparent polymer sheets are useful and advantageous in terms of costs when used for producing

flexible solar cells.

In the case where another layer is formed on a transparent polymer sheet by heating, for example, in the case where a transparent conductive layer is formed on a support by heating at approximately 250°C, Teflon (registered trademark) having heat resistance at a temperature of 250°C or more is particularly preferable among the above-exemplified transparent polymer sheets.

Further, a light transmitting substrate may be used when a completed solar cell is attached to other constructions. That is, it is made easy to attach peripheral parts of the support such as a glass substrate to other supports by using metal processing members and screws.

(Transparent conductive layer 2)

The transparent conductive layer is not particularly limited as long as it is generally usable for solar cells and it is of a material capable of achieving the effects of the present invention. The material may be a material substantially transmitting light with a wavelength to which a sensitizing dye to be described later has a practically effective sensitivity, and thus the material does not necessarily need to have transmittance to light in the entire wavelength region.

Examples of such a material include indium-tin compounded oxide (ITO), tin oxide ($SnO_2$), fluorine-doped tin oxide (F-doped $SnO_2$ or FTO) and zinc oxide (ZnO).

The transparent conductive layer may be formed on the light transmitting substrate by a commonly known method such as a sputtering method and a spraying method.

It is preferable that the film thickness of the transparent conductive layer is approximately 0.02 μm to 5 μm. The film resistance thereof is more preferable as it is lower and it is preferably 40 Ω/sq or less.

In the present invention, a light transmitting conductive substrate obtained by layering a transparent conductive layer of FTO on a light transmitting substrate of soda lime float glass is preferably used.

(Counter electrode)

The counter electrode may consist only of the conductive layer 6, or of the catalyst layer 5 and the conductive layer 6. That is, when the conductive layer itself has a catalyst function, the catalyst layer is not particularly needed, but when the conductive layer itself does not have a catalyst function, it is preferable that the catalyst layer 5 is provided between the photoelectric conversion layer 4 and the conductive layer 6.

(Conductive layer 6)

The conductive layer may be formed of a material of the transparent conductive layer or may be formed of a light un-transmitting material. Examples of the light un-transmitting material include metal materials such as titanium, tungsten, gold, silver, copper, aluminum and nickel.

The conductive layer may be formed by a commonly known method such as a sputtering method and a spraying method.

It is preferable that the film thickness of the conductive layer is approximately 0.02 μm to 5 μm. The film resistance thereof is more preferable as it is lower and it is preferably 40 Ω/sq or less.

(Catalyst layer 5)

The catalyst layer is not particularly limited as long as it is generally usable for solar cells and it is of a material capable of achieving the effects of the present invention. Examples of such a material include platinum (work function: 6.35 eV); and carbon (work function: 4.7 eV) such as carbon black, ketjen black, graphite, glass carbon, amorphous carbon, hard carbon, soft carbon, carbon whisker, carbon nanotube and fullerene, which are preferably used, for example, in the case of using titanium oxide (electron affinity = conduction band energy level: 4.1 eV) for the porous semiconductor layer.

When the material of the catalyst layer is platinum, it may be formed by a commonly known method such as a sputtering method, thermal decomposition of chloroplatinic acid, electrodeposition, a PVC method, and a vapor deposition method. It is preferable that the film thickness of the layer is approximately 0.5 nm to 1000 nm. In addition, the layer may be formed on a substrate into an island shape instead of a film shape.

When the material of the catalyst layer is carbon, it may be formed by an application method such as a screen printing method using a paste like material obtained by dispersing carbon in a solvent.

(Photoelectric conversion layer 3)

The photoelectric conversion layer is formed by adsorbing a dye in the porous semiconductor layer and filling the porous semiconductor layer with a carrier transporting material.

(Porous semiconductor layer)

The semiconductor used for the porous semiconductor layer is not particularly limited as long as it is generally usable for solar cells and it is of a material capable of achieving the effects of the present invention. Examples of such a material include compounds such as titanium oxide, zinc oxide, tin oxide, iron oxide, niobium oxide, cerium oxide, tungsten oxide, barium titanate, strontium titanate, cadmium sulfide, lead sulfide, zinc sulfide, indium phosphide, copper-indium sulfide (CuInS2), $CuAlO_2$, $SrCu_2O_2$; and combinations thereof. Out of these, titanium oxide is particularly preferable in terms of stability and safety.

Titanium oxide includes various kinds of titanium oxide in a narrow sense such as anatase type titanium oxide, rutile type titanium oxide, amorphous titanium oxide, metatitanic acid and orthotitanic acid; titanium hydroxide; and hydrated titanium oxide, and these compounds may be used alone or in the form of mixtures. Two types of crystal systems, the anatase type and the rutile type, may be formed in accordance with a production method and heat hysteresis, and the anatase type is common. In the present invention, in particular, it is preferable that the content of the anatase type is higher, and it is particularly preferable that the proportion thereof is 80% or more.

The crystalline form of the semiconductor may be either monocrystal or polycrystal, but polycrystal is preferable in terms of stability, difficulty of crystal growth, production cost, and the like. In particular, polycrystalline particle semiconductors of fine powder (nanoscale to microscale) are preferable.

In addition, two or more kinds of semiconductor particles having different particle diameters may be mixed and used. Semiconductor particles having a larger particle diameter (for example, 100 nm to 500 nm) can be expected to improve a light trapping ratio as scattering incident light, and semiconductor particles having a smaller particle diameter (for example, 5 nm to 50 nm) can be expected to improve an adsorption rate of a dye as containing more adsorption points. The ratio of the average particle diameters of the semiconductor particles is preferably 10 times or more. In addition, materials of each particulate may be the same or different, and in the case of different semiconductor compounds, it is particularly preferable that the particle diameter of a semiconductor having strong adsorption is reduced.

Furthermore, the porous semiconductor layer may have a multi-layer structure consisting of the same or different materials.

Titanium oxide which is the most preferable form of the semiconductor fine particle can be produced in accordance with methods described in various references. In addition, may be mentioned a method by high temperature hydrolysis of a chloride, which is developed by Degussa.

(Method for forming porous semiconductor layer)

The porous semiconductor layer can be formed by applying a suspension containing semiconductor particles on the transparent conductive layer 2 and drying and/or firing the same.

First, the suspension is obtained by dispersing semiconductor fine particles in a solvent such as, for example, glyme type solvents such as ethylene glycol monomethyl ether; alcohols such as isopropyl alcohol; alcohol type mixed solvents such as isopropyl alcohol/toluene; and water. Instead of such a suspension, a commercialized titanium oxide paste (Ti-nanoxide, D, T/SP, D/SP product by Solaronix) may be used.

Subsequently, the obtained suspension is applied onto the transparent conductive layer 2 by a commonly known method such as a doctor blade method, a squeeze method, a spin coating method, and a screen printing method, and dried and/or fired to obtain a porous semiconductor layer. Conditions such as temperature, period of time, atmosphere for the drying and the firing may be appropriately set according to the kind and form of the materials to be used. The firing may be carried out, for example, at a temperature of approximately 50°C to 800°C in atmospheric air or inert gas for approximately 10 seconds to 12 hours. The drying and the firing may be carried out at a constant temperature only once or at varied temperatures two or more times.

When the porous semiconductor layer has a multi-layer structure, the above-described steps should be repeated.

The film thickness of the porous semiconductor layer or the total film thickness of the porous semiconductor layer in the case of a multi-layer structure is preferably approximately 0.1 μm to 100 μm. In order to improve the adsorption rate of a dye, in addition, it is preferable that the porous semiconductor layer has a larger surface area, for example, a surface area of approximately 10 $m^2/g$ to 200 $m^2/g$.

After the formation of the porous semiconductor layer on the transparent conductive layer, the porous semiconductor layer may be treated with a titanium tetrachloride aqueous solution for the purposes of improvement of electrical

connection among semiconductor fine particles, increase of the surface area of the porous semiconductor layer, and reduction of defect levels in the semiconductor fine particles, when the porous semiconductor layer is a titanium oxide film, for example.

(Dye)

Examples of a dye that is to be adsorbed in the porous semiconductor layer and that has a function as a photo sensitizer include organic dyes and metal complex dyes having absorption in various visible light regions and/or infrared regions, and one or more kinds of these dyes may selectively be used.

Examples of the organic dyes include azo type dyes, quinone type dyes, quinoneimine type dyes, quinacridone type dyes, squarylium type dyes, cyanine type dyes, merocyanine type dyes, triphenylmethane type dyes, xanthene type dyes, porphyrin type dyes, perylene type dyes, indigo type dyes, naphthalocyanine type dyes, and the like. The absorbance index of an organic dye is generally high as compared with that of a metal complex dye having morphology of coordination bond of a molecule to a transition metal.

Examples of the metal complex dyes include those having morphology of coordination bond of molecules to metals such as Cu, Ni, Fe, Co, V, Sn, Si, Ti, Ge, Cr, Zn, Ru, Mg, Al, Pb, Mn, In, Mo, Y, Zr, Nb, Sb, La, W, Pt, Ta, Ir, Pd, Os, Ga, Tb, Eu, Rb, Bi, Se, As, Sc, Ag, Cd, Hf, Re, Au, Ac, Tc, Te and Rh, and among these, phthalocyanine type dyes and ruthenium type dyes are preferable and ruthenium type metal complex dyes are particularly preferable.

In particular, ruthenium type metal complex dyes represented by the following formulae including (1) Ruthenium 535 dye, (2) Ruthenium 535-bis TBA dye, and (3) Ruthenium 620-1H3TBA dye (trade names, all manufactured by Solaronix) are preferable.

[Formulae 1]

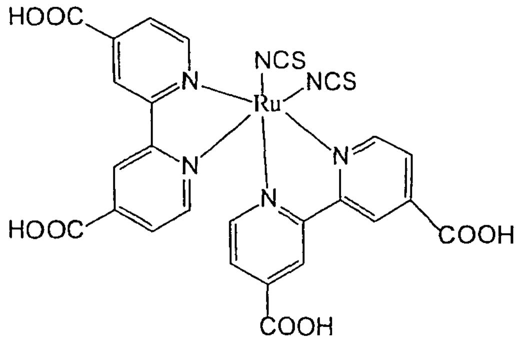

(1)

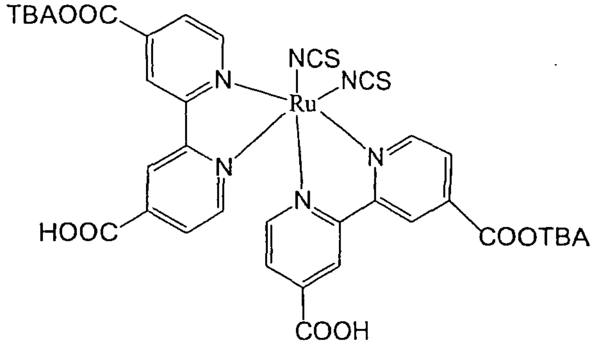

(2)

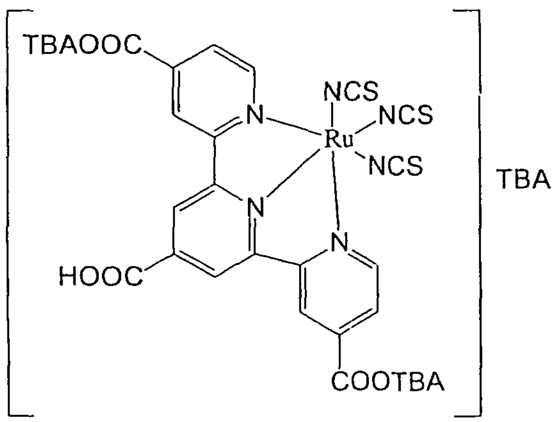

(3)

Further, in order to firmly adsorb a dye in the porous semiconductor layer, the dye molecule preferably has an interlocking group such as a carboxyl group, an alkoxy group, a hydroxyl group, a sulfonic acid group, an ester group, a mercapto group, and a phosphonyl group. The interlocking group provides an electric bond for making the electron transfer easy between the dye in an excited state and the conduction band of the porous semiconductor layer.

(Dye adsorption)

A dye can be adsorbed in the porous semiconductor layer by a method in which the porous semiconductor layer is immersed in a solution in which the dye is dissolved (dye solution), for example.

The solvent of the dye solution is not particularly limited as long as it dissolves the dye to be used, and specific examples thereof include alcohol, toluene, acetonitrile, tetrahydrofuran (THF), chloroform, dimethylformamide, and the like. It is preferable to use a purified solvent, and the dissolving temperature may be increased or a mixed solvent of two or more kinds of different solvents may be used in order to improve the solubility of the dye.

The concentration of the dye in the dye solution may be determined according to conditions including the dye to be used, the kind of the solvent, dye adsorption steps, and the like, and it is preferably $1 \times 10^{-5}$ mol/L or more.

(Carrier transporting material)

The photoelectric conversion layer 3 is sandwiched between the transparent conductive layer 2 together with the grid electrode 7 and the counter electrode (only the conductive layer 6 or the catalyst layer 5 together with the conductive layer 6). The carrier transporting material is injected to the porous semiconductor layer and pores thereof in the sandwiched area to fill the porous semiconductor layer.

The carrier transmitting material is not particularly limited as long as it is generally usable for solar cells and capable of achieving the effects of the present invention. Examples of such a material include an electrolytic solution (liquid electrolyte) containing a redox electrolyte.

Examples of the redox electrolyte include $I^-/I^{3-}$ type, $Br^{2-}/Br^{3-}$ type, $Fe^{2+}/Fe^{3+}$ type, and quinone/hydroquinone type redox molecules.

Specific examples thereof include combinations of iodine ($I_2$) with a metal iodine such as lithium iodide (LiI), sodium iodide (NaI), potassium iodide (KI), calcium iodide ($CaI_2$); combinations of iodine with a tetraalkylammonium salt such as tetraethylammonium iodide (TEAI), tetrapropylammonium iodide (TPAI), tetrabutylammonium iodide (TBAI), tetrahexylammonium iodide (THAI); and combinations of bromine with a metal bromine such as lithium bromide (LiBr), sodium bromide (NaBr), potassium bromide (KBr), calcium bromide ($CaBr_2$), and among these, the combination of LiI and $I_2$ is particularly preferable.

Examples of the solvent for the electrolytic solution include carbonate compounds such as propylene carbonate; nitrile compounds such as acetonitrile; alcohols such as ethanol; water; and non-protonic polar substances. Among these, carbonate compounds and nitrile compounds are particularly preferable. Two or more of these solvents may be used in a form of a mixture.

If necessary, an additive may be added to the above-mentioned electrolytic solution.

Examples of conventionally used additives include nitrogen-containing aromatic compounds such as tert-butylpyridine (TBP); and imidazole salts such as dimethylpropylimidazole iodide (DMPII), methylpropylimidazole iodide (MPII), ethylmethylimidazole iodide (EMII), ethylimidazole iodide (EII), and hexylmethylimidazole iodide (HMII).

The redox electrolyte concentration in the electrolytic solution is preferably in a range of 0.001 mol/L to 1.5 mol/L and particularly preferably in a range of 0.01 mol/L to 0.7 mol/L.

(Grid electrode 7)

The grid electrode is not particularly limited as long as it is generally usable for solar cells and it is of a material capable of achieving the effects of the present invention. Examples of such a material include gold (2.2 $\mu\Omega\cdot$cm), silver (1.6 $\mu\Omega\cdot$cm), copper (1.7 $\mu\Omega\cdot$cm), aluminum (2.7 $\mu\Omega\cdot$cm), nickel (7.0 $\mu\Omega\cdot$cm), titanium (47 $\mu\Omega\cdot$cm), tantalum (13.1 $\mu\Omega\cdot$cm), and the like. Among these materials, nickel, titanium, and tantalum having corrosion resistance to the carrier transporting material (electrolytic solution) are particularly preferable, and gold, silver, copper, and aluminum having high conductivity are particularly preferable. Here, when the grid electrode is formed of a material that does not have corrosion resistance to the electrolytic solution, it is preferable that a protective insulating layer of a silicon oxide, a zirconium oxide, a rutile type titanium oxide, or the like is formed for the grid electrode.

The grid electrode can be formed on the transparent conductive layer into the shape as described above by a commonly known method such as a sputtering method, a spraying method, and a screen printing method.

The shape and the dimension (Lx, Ly, and W) of the grid electrode are set so as to satisfy the formula of the present invention as described above. In addition, the film thickness thereof may be set in view of the resistance value, and it is approximately 0.5 $\mu$m to 30 $\mu$m, for example.

When the sheet resistance of the transparent conductive layer is 8 $\Omega$/sq to 15 $\Omega$/sq, it is preferable that the length Ly of the grid electrode and the length Y of the porous semiconductor layer in the direction of serial connection satisfy the following formula:

$$Y\,[cm] - 1.0\,[cm] < Ly\,[cm] \leq Y\,[cm]$$

Ly is a length in an area surrounded by X and Y.

(Connection layer 8)

The connection layer electrically connects neighboring dye-sensitized solar cells together.

The material used for the connection layer is not particularly limited as long as it is generally usable for solar cells and capable of achieving the effects of the present invention. Examples of such a material include the materials

exemplified for the transparent conductive layer and the conductive layer. The method and conditions for forming the connection layer are in accordance with those for the transparent conductive layer and the conductive layer.

(Porous insulating layer 4)

Preferably, a porous insulating layer 4 is provided between the porous semiconductor layer and the counter electrode for insulation therebetween.

The material used for the porous insulating layer is not particularly limited as long as it is generally usable for solar cells and capable of achieving the effects of the present invention. Examples of such a material include compounds such as titanium oxide, niobium oxide, zirconium oxide, silicon oxide (silica glass, soda glass), aluminum oxide, and barium titanate; and combinations thereof. Preferably, titanium oxide is granular having an average particle diameter of 100 nm or more, and the materials other than titanium oxide are granular having an average particle diameter of 5 nm to 500 nm, more preferably 10 nm to 300 nm.

(Method for forming porous insulating layer)

The porous insulating layer can be formed by, for example, applying a suspension containing particles for forming the porous insulating layer on the porous semiconductor layer 3 and drying and/or firing the same.

First, the particles for forming the porous insulating layer are dispersed in a solvent such as, for example, glyme type solvents such as ethylene glycol monomethyl ether; alcohols such as isopropyl alcohol; alcohol type mixed solvents such as isopropyl alcohol/toluene; and water, and a high molecular compound such as ethylcellulose and polyethylene glycol (PEG) is further mixed thereto to obtain a paste.

Subsequently, the obtained paste is applied onto the porous semiconductor layer 3 by a commonly known method such as, for example, a doctor blade method, a squeeze method, a spin coating method, and a screen printing method, and dried and/or fired to obtain a porous insulating layer. Conditions such as temperature, period of time, atmosphere for the drying and the firing may be appropriately set according to the kind and form of the materials to be used.

It is preferable that the film thickness of the porous insulating layer is approximately 1 $\mu$m to 10 $\mu$m.

(Inter-cell insulating layer 9)

The inter-cell insulating layer electrically insulates neighboring dye-sensitized solar cells.

The material used for the inter-cell insulating layer is not particularly limited as long as it is generally usable for solar cells and capable of achieving the effects of the present invention. Examples of such a material include the same materials as for the porous insulating layer. Among those materials, rutile type titanium oxide and silicon oxide, which is unlikely to adsorb a dye are particularly preferable.

The method and conditions for forming the inter-cell insulating layer are in accordance with those for the porous semiconductor layer and the porous insulating layer.

(Sealing substrate 10 and sealing material)

Examples of the sealing substrate include light transmitting or light un-transmitting glass substrates.

In addition, the sealing material is to seal the photoelectric conversion layer that is provided between the transparent substrate 1 and the sealing substrate 10 and that is filled with the carrier transporting material. Examples of the sealing material include resins of organic polymers such as UV-curable resins (such as model No.: 31X-101, product by Three Bond Co., Ltd.), and thermosetting resins (commercialized epoxy resins).

EXAMPLES

The present invention will be further described in detail by way of Production Examples, Examples, and Comparative Examples; however, it is not intended that the present invention is limited to these Production Examples and Examples.

(Production Example 1)

A module as illustrated in FIG. 1 was produced.

FIG. 1 is (a) a schematic plan view of a light receiving face and (b) a schematic cross sectional view of a joining part in a module of the present invention. In the drawing, a reference numeral 1 denotes a light transmitting substrate, a reference numeral 2 denotes a transparent conductive layer, a reference numeral 3 denotes a photoelectric conversion

layer, a reference numeral 4 denotes a porous insulating layer, a reference numeral 5 denotes a catalyst layer, a reference numeral 6 denotes a conductive layer, a reference numeral 7 denotes a grid electrode, a reference numeral 8 denotes a connection layer, a reference numeral 9 denotes an inter-cell insulating layer, and a reference numeral 10 denotes a sealing substrate. The photoelectric conversion layer 3 is formed by adsorbing a dye in a porous semiconductor layer and filling the porous semiconductor layer with a carrier transporting material. In addition, X and Y represent the length and the width of the porous semiconductor layer in the photoelectric conversion layer, respectively, and Lx, Ly and W represent the distance (disposing cycle) between grid electrodes, the length of the grid electrode, and the width of the grid electrode, respectively.

Here, a general-purpose measuring apparatus (model number: Surfcom 1400A, product by TOKYO SEIMITSU CO., LTD.) was used for measurement of film thicknesses in Production Examples.

A commercialized $SnO_2$ film-bearing glass substrate (100 mm × 200 mm × 4 mm in thickness, product by Nippon Sheet Glass Co., Ltd.) obtained by forming an $SnO_2$ film having a thickness of approximately 0.5 μm as the transparent conductive layer 2 on the light transmitting substrate 1 was used.

Formation of grid electrode

With the use of a screen printing apparatus (model number: LS-34TVA, product by Newlong Seimitsu Kogyo Co., Ltd.) and a mask (screen printing plate) having a predetermined shape, a commercialized silver paste (model number: NP-4635P, product by Noritake Co., Ltd.) was applied (printed) onto the transparent conductive layer 2 of the $SnO_2$ film-bearing glass substrate (position of the reference numeral 7 in FIG. 1 (a)). Subsequently, the applied film was preliminarily dried at 150°C in air for 10 minutes and fired at 450°C in air for 2 hours to obtain a grid electrode 7 of a silver electrode having a film thickness of 15 μm. In the application, the length Ly of the grid electrode was set to be 1 cm, 2 cm, 4 cm, 5 cm, 8 cm, 10 cm, 12 cm, and 15 cm, while the distance Lx between grid electrodes was fixed to 1 cm and the width W of the grid electrode was fixed to 0.4 cm (400 μm). The resistance value per grid electrode in each length of the grid electrodes was $2.67 \times 10^{-2}\ \Omega$, $5.33 \times 10^{-2}\ \Omega$, $1.07 \times 10^{-1}\ \Omega$, $1.32 \times 10^{-1}\ \Omega$, $2.10 \times 10^{-1}\ \Omega$, $2.61 \times 10^{-1}\ \Omega$, $3.10 \times 10^{-1}\Omega$, and $4.15 \times 10^{-1}\ \Omega$. In addition, the number of grid electrodes was 10 (X = 10 cm). In this Example, Y = Ly.

Formation of protective insulating layer

With the use of a screen printing apparatus (model number: LS-34TVA, product by Newlong Seimitsu Kogyo Co., Ltd.) and a mask (screen printing plate) having a predetermined shape, a commercialized glass frit (product by Noritake Co., Ltd.) was applied (printed) onto the transparent conductive layer 2 so as to cover the grid electrode 7. Subsequently, the applied film was preliminarily dried at 100°C in air for 10 minutes and fired at 450°C in air for 1 hour to obtain a protective insulating layer having a width of 1 mm and a film thickness of 20 μm (not shown).

Formation of porous semiconductor layer

With the use of a screen printing apparatus (model number: LS-34TVA, product by Newlong Seimitsu Kogyo Co., Ltd.) and a mask (screen printing plate) having a predetermined shape, a commercialized titanium oxide paste (trade name Ti-Nanoxide D/SP, average particle diameter: 13 nm, product by Solaronix) was applied onto the transparent conductive layer 2 on which the grid electrode 7 and the protective insulating layer have been formed (position of the reference numeral 3 in FIG. 1 (a)) and left at room temperature for 1 hour for leveling. Subsequently, the applied film was preliminarily dried at 80°C in air for 20 minutes and fired at 450°C in air for 1 hour to obtain a porous semiconductor layer of a titanium oxide film having a film thickness of 28 μm.

Formation of inter-cell insulating layer (sealing part)

With the use of a screen printing apparatus (model number: LS-34TVA, product by Newlong Seimitsu Kogyo Co., Ltd.) and a mask (screen printing plate) having a predetermined shape, a commercialized glass frit (product by Noritake Co., Ltd.) was applied (printed) onto the transparent conductive layer 2 on which the grid electrode 7, the protective insulating layer, and the porous semiconductor layer have been formed (position of the reference numeral 9 in FIG. 1 (a)). Subsequently, the applied film was preliminarily dried at 100°C in air for 10 minutes and fired at 450°C in air for 1 hour to obtain an inter-cell insulating layer 9 having a film thickness of approximately 25 μm.

Formation of porous insulating layer

With the use of a screen printing apparatus (model number: LS-34TVA, product by Newlong Seimitsu Kogyo

Co., Ltd.) and a mask (screen printing plate) the same as for the porous semiconductor layer, a paste containing zirconium oxide fine particles (particle diameter; 100 nm, product by C.I. Kasei Co., Ltd.) was applied onto the porous semiconductor layer and left at room temperature for 1 hour for leveling. Subsequently, the applied film was preliminarily dried at 80°C in air for 20 minutes and fired at 450°C in air for 1 hour to obtain a porous insulating layer 4 of a zirconium oxide film having a film thickness of 5 μm.

The paste was prepared by dispersing zirconium oxide fine particles and ethylcellulose as a polymer compound in terpineol as a solvent.

Formation of catalyst layer

With the use of an electron beam vapor-deposition apparatus (model number: EVD-500A, product by ANELVA corporation) and a mask having a predetermined shape, platinum was vapor-deposited on the porous insulating layer 4 at a deposition rate of 0.1 Å/S to obtain a catalyst layer 5 of platinum having a film thickness of approximately 5 nm.

Formation of conductive layer

With the use of an electron beam vapor-deposition apparatus (model number: EVD-500A, product by ANELVA corporation) and a mask having a predetermined shape, titanium was vapor-deposited on the catalyst layer 5 and a part of the inter-cell insulating layer 9 at a deposition rate of 0.1 Å/S so as to be electrically connected to the grid electrode 7 of a solar cell neighboring via the connection layer 8 to be formed in the next step to obtain a conductive layer 6 of a titanium film having a film thickness of approximately 500 μm.

Formation of connection layer

With the use of an electron beam vapor-deposition apparatus (model number: EVD-500A, product by ANELVA corporation) and a mask having a predetermined shape, titanium was vapor-deposited on the grid electrode 7 between neighboring inter-cell insulating layers 9 at a deposition rate of 0.1 Å/S so that the grid electrode 7 of a neighboring solar cell and the conductive layer 6 are electrically connected to obtain a connection layer 8 of a titanium film.

Preparation of dye solution

Dye solutions were prepared by dissolving the following ruthenium type metal complex dyes 1 to 3 in a mixed solvent of acetonitrile (product by Aldrich Chemical Company)/t-butyl alcohol (product by Aldrich Chemical Company) at volume ratio of 1:1 so that the concentration of each dye will be $4 \times 10^{-4}$ mol/L.

Dye 1: Ruthenium 620-1H3TBA dye, product by Solaronix, Formula (3)
Dye 2: Ruthenium 535-bisTBA dye, product by Solaronix, Formula (2)
Dye 3: NKX2311 dye, product by Hayashibara Biochemical Laboratories, Inc.

Adsorption of dye

The laminate formed in the above-described manner was immersed in a previously prepared dye solution under a temperature condition of 40°C for 20 hours to adsorb the dye in the laminate. Thereafter, the laminate was washed with ethanol (product by Aldrich Chemical Company) and dried at approximately 60°C for approximately 5 minutes.

Preparation of electrolytic solution

The electrolytic solution (electrolytic solution containing a redox electrolyte) as a carrier transporting material was prepared by dissolving 0.1 mol/L of LiI (product by Aldrich Chemical Company) as a redox molecule, 0.01 mol/L of $I_2$ (product by Tokyo Kasei Kogyo Co., Ltd.), 0.5 mol/L of tert-butylpyridine (TBP, product by Aldrich Chemical Company) as an additive, and 0.6 mol/L of dimethylpropylimidazole iodide (DMPII, product by Shikoku Chemicals Corporation) in acetonitrile as a solvent.

Production of solar cell module

A UV-curable resin (model number: 31X-101, product by Three Bond Co., Ltd.) was applied onto the inter-cell insulating layer 9 on the light transmitting substrate 1, and a separately prepared sealing substrate 10 of a quartz glass (model number: 7059, 50 mm $\times$ 70 mm $\times$ 1.1 mm in thickness, product by Corning) was stuck thereto. Subsequently,

ultraviolet rays were applied to the application part with the use of a UV irradiation lamp (trade name: Novacure, product by EFD corporation) to cause the resin to cure and fix the two substrates.

The electrolytic solution was injected as a carrier transporting material through an electrolytic solution injection port previously provided in the sealing substrate, and then the electrolytic solution injection port was sealed to form the photoelectric conversion layer 3 and complete a module. Thus obtained were 24 kinds of modules of 8 kinds of grid electrode patterns (lengths Ly) × 3 kinds of dyes.

Light having an intensity of 1 kW/$m^2$ (AM 1.5 solar simulator) was applied to the obtained solar cells, and the solar cells were measured for the short-circuit current (Isc), open voltage (Voc), and FF to determine the photoelectric conversion efficiency (may be referred to simply as "conversion efficiency"). The short-circuit current (Isc) was divided by the aperture area S of the module (area surrounded by an outer frame of the solar cells (photoelectric conversion elements) in the module), and then multiplied by the open voltage ($V_{OC}$) and FF to obtain the "conversion efficiency".

Table 1 shows a result obtained. Table 1 includes the numerical value "E" of the formula of the present invention.

[Table 1]

| dye | length Ly of grid electrode (cm) | short-circuit current $I_{SC}$ (mA) | $I_{SC}$/X (mA/cm) | E (V) | conversion efficiency (%) |
|---|---|---|---|---|---|
| Dye 1 | 1 | 201 | 20.1 | 0.0003 | 7.81 |
| | 2 | 404 | 40.4 | 0.0010 | 8.72 |
| | 4 | 804 | 80.4 | 0.0041 | 9.10 |
| | 5 | 1015 | 101.5 | 0.0065 | 9.25 |
| | 8 | 1608 | 160.8 | 0.0165 | 8.99 |
| | 10 | 2010 | 201.0 | 0.0257 | 8.45 |
| | 12 | 2424 | 242.4 | 0.0372 | 7.49 |
| | 15 | 3045 | 304.5 | 0.0585 | 6.22 |
| Dye 2 | 1 | 151 | 15.1 | 0.0002 | 5.86 |
| | 2 | 298 | 29.8 | 0.0008 | 6.54 |
| | 4 | 604 | 60.4 | 0.0031 | 6.83 |
| | 5 | 760 | 76.0 | 0.0049 | 6.94 |
| | 8 | 1208 | 120.8 | 0.0124 | 6.74 |
| | 10 | 1530 | 153.0 | 0.0196 | 6.34 |
| | 12 | 1824 | 182.4 | 0.0280 | 5.62 |
| | 15 | 2265 | 226.5 | 0.0435 | 4.50 |
| Dye 3 | 1 | 135 | 13.5 | 0.0002 | 3.90 |
| | 2 | 268 | 26.8 | 0.0007 | 4.11 |
| | 4 | 545 | 54.4 | 0.0028 | 4.51 |
| | 5 | 675 | 67.5 | 0.0043 | 4.63 |
| | 8 | 1080 | 108.0 | 0.0111 | 4.50 |
| | 10 | 1340 | 134.0 | 0.0172 | 4.23 |
| | 12 | 1620 | 162.0 | 0.0249 | 3.75 |
| | 15 | 2025 | 202.5 | 0.0389 | 3.00 |

Table 1 indicates the followings:

(1) The conversion efficiency tends to increase when the value of $I_{SC}$ / X is 30 mA/cm or more.

(2) The conversion efficiency tends to increase when E is in a range of $0.001 < E < 0.03$.

(3) The conversion efficiency tends to increase when the length Ly of the grid electrode (=length Y of the porous semiconductor layer in the direction of serial connection) is in a range of 2 cm to 10 cm, though the length Ly for the conversion efficiency to be maximum varies from dye to dye to be used.

(Production Example 2)

Grid electrodes 7 were formed as described below, and modules as illustrated in FIG. 1 were produced and evaluated in the same manner as in Production Example 1 except that only Dye 1 was used as the dye for the dye solution.

The distance Lx between grid electrodes was set to 0.2 cm, 0.4 cm, 0.5 cm, 0.8 cm, 1.0 cm, 1.2 cm, 1.5 cm, and 1.7 cm (X = 2 cm, 4 cm, 5 cm, 8 cm, 10 cm, 12 cm, 15 cm, and 17 cm, respectively), while the length Ly of the grid electrode (=length Y of the porous semiconductor layer in the direction of serial connection) was fixed to 5 cm and the width W of the grid electrode was fixed to 0.4 cm (400 μm).

Table 2 shows a result obtained.

[Table 2]

| distance Lx between grid electrodes (cm) | short-circuit current $I_{SC}$ (mA) | $I_{SC}/X$ (mA/cm) | conversion efficiency (%) |
|---|---|---|---|
| 0.2 | 202 | 101.0 | 7.40 |
| 0.4 | 402 | 100.5 | 8.33 |
| 0.5 | 508 | 101.5 | 9.24 |
| 0.8 | 805 | 100.5 | 9.26 |
| 1.0 | 1005 | 100.5 | 9.25 |
| 1.2 | 1212 | 101.0 | 9.01 |
| 1.5 | 1523 | 101.5 | 8.87 |
| 1.7 | 1709 | 100.5 | 8.03 |

Table 2 indicates that the conversion efficiency tends to increase when the distance Lx between grid electrodes is in a range of 0.4 cm to 1.5 cm.

(Production Example 3)

Grid electrodes 7 were formed as described below, and modules as illustrated in FIG. 1 were produced and evaluated in the same manner as in Production Example 1 except that only Dye 1 was used as the dye for the dye solution.

The width W of the grid electrode was set to 0.005 cm, 0.008 cm, 0.01 cm, 0.04 cm, 0.08 cm, 0.1 cm, 0.15 cm, and 0.18 cm, while the distance Lx between grid electrodes was fixed to 1.0 cm and the length Ly of the grid electrode (=length Y of the porous semiconductor layer in the direction of serial connection) was fixed to 5 cm.

Table 3 shows a result obtained. Table 3 includes the numerical value "E" of the formula of the present invention.

[Table 3]

| width W of grid electrode (cm) | short-circuit current $I_{SC}$ (mA) | $I_{SC}/X$ (mA/cm) | E (V) | conversion efficiency (%) |
|---|---|---|---|---|
| 0.005 | 1005 | 100.5 | 0.0003 | 5.55 |
| 0.008 | 1010 | 101.0 | 0.0010 | 7.40 |
| 0.01 | 1005 | 100.5 | 0.0041 | 8.33 |
| 0.04 | 1015 | 101.5 | 0.0065 | 9.24 |
| 0.08 | 1005 | 100.5 | 0.0165 | 9.26 |
| 0.1 | 1005 | 100.5 | 0.0257 | 9.25 |
| 0.15 | 950 | 95 | 0.0372 | 9.01 |
| 0.18 | 1025 | 102.5 | 101.5 | 8.87 |

Table 3 indicates that the conversion efficiency tends to increase when the width W of the grid electrode is in a range of 0.1 mm to 1 mm.

(Examples 1 to 16 and Comparative Examples 1 to 8)

Grid electrodes 7 were produced so as to have the distances Lx between grid electrodes, the lengths Ly of the grid electrode, and the widths W of the grid electrode shown in Table 4 in the same manner as in Production Example 1 except that the dyes shown in Table 4 were used as dyes for the dye solutions to produce and evaluate modules as shown in FIG. 1.

[Table 4]

| | dye | distance Lx between grid electrodes (cm) | length Ly of grid electrode (cm) | width W of grid electrode (cm) | E (V) | conversion efficiency (%) |
|---|---|---|---|---|---|---|
| Example 1 | Dye 1 | 1.0 | 2 | 0.04 | 0.0010 | 8.72 |
| Example 2 | Dye 1 | 1.0 | 4 | 0.04 | 0.0041 | 9.10 |
| Example 3 | Dye 1 | 1.0 | 5 | 0.04 | 0.0065 | 9.25 |
| Example 4 | Dye 1 | 1.0 | 8 | 0.04 | 0.0165 | 8.99 |
| Example 5 | Dye 1 | 1.0 | 10 | 0.04 | 0.0257 | 8.45 |
| Example 6 | Dye 2 | 1.0 | 4 | 0.04 | 0.0031 | 6.83 |
| Example 7 | Dye 2 | 1.0 | 5 | 0.04 | 0.0049 | 6.94 |
| Example 8 | Dye 2 | 1.0 | 8 | 0.04 | 0.0124 | 6.74 |
| Example 9 | Dye 2 | 1.0 | 10 | 0.04 | 0.0196 | 6.34 |
| Example 10 | Dye 1 | 0.4 | 5 | 0.04 | 0.0024 | 8.33 |
| Example 11 | Dye 1 | 0.5 | 5 | 0.04 | 0.0031 | 9.24 |
| Example 12 | Dye 1 | 1.0 | 5 | 0.04 | 0.0064 | 9.25 |
| Example 13 | Dye 1 | 1.5 | 5 | 0.04 | 0.0099 | 8.87 |
| Example 14 | Dye 1 | 1.0 | 5 | 0.01 | 0.0265 | 9.10 |
| Example 15 | Dye 1 | 1.0 | 5 | 0.08 | 0.0031 | 8.99 |
| Example 16 | Dye 1 | 1.0 | 5 | 0.10 | 0.0024 | 8.56 |
| Comparative Example 1 | Dye 1 | 1.0 | 1 | 0.04 | 0.0003 | 7.81 |

(continued)

| | dye | distance Lx between grid electrodes (cm) | length Ly of grid electrode (cm) | width W of grid electrode (cm) | E (V) | conversion efficiency (%) |
|---|---|---|---|---|---|---|
| Comparative Example 2 | Dye 1 | 1.0 | 15 | 0.04 | 0.0585 | 6.22 |
| Comparative Example 3 | Dye 2 | 1.0 | 1 | 0.04 | 0.0002 | 5.86 |
| Comparative Example 4 | Dye 2 | 1.0 | 15 | 0.04 | 0.0435 | 5.62 |
| Comparative Example 5 | Dye 1 | 0.2 | 5 | 0.04 | 0.0011 | 5.55 |
| Comparative Example 6 | Dye 1 | 4.0 | 5 | 0.04 | 0.0065 | 4.03 |
| Comparative Example 7 | Dye 1 | 1.0 | 5 | 0.18 | 0.0008 | 7.01 |
| Comparative Example 8 | Dye 1 | 1.0 | 5 | 0.008 | 0.0334 | 7.77 |

BRIEF DESCRIPTION OF THE DRAWINGS

FIG. 1 is (a) a schematic plan view of a light receiving face and (b) a schematic cross sectional view of a joining part in a module of the present invention.

DESCRIPTION OF THE REFERENCE NUMERALS

1 Light transmitting substrate
2 Transparent conductive layer
3 Photoelectric conversion layer
4 Porous insulating layer
5 Catalyst layer
6 Conductive layer
7 Grid electrode
8 Connection layer
9 Inter-cell insulating layer
10 Sealing substrate
X Length of porous semiconductor layer in photoelectric conversion layer
Y Width of porous semiconductor layer in photoelectric conversion layer
Lx Distance (disposing cycle) between grid electrodes
Ly Length of grid electrode
W Width of grid electrode

**Claims**

**1.** A dye-sensitized solar cell module comprising:

at least two dye-sensitized solar cells each formed by layering, on a light transmitting substrate (1), a transparent conductive layer (2) formed on the light transmitting substrate (1), a grid electrode (7) formed on the transparent conductive layer (2), a photoelectric conversion layer (3) in which a dye is adsorbed in a porous semiconductor

layer and the porous semiconductor layer is filled with a carrier transporting material, and a counter electrode (5, 6), wherein
the photoelectric conversion layer (3) is sandwiched between the transparent conductive layer (2) together with the grid electrode (7) and the counter electrode (5, 6),
the at least two dye-sensitized solar cells are arranged on the same light transmitting substrate (1) via an inter-cell insulating layer (9), and
the grid electrode (7) of one dye-sensitized solar cell and the counter electrode (5, 6) of its neighboring dye-sensitized solar cell are connected in series via a connection layer (8).

**2.** The dye-sensitized solar cell module according to claim 1, wherein the grid electrode (7) has an interdigital shape extending from the connection layer (8).

**3.** The dye-sensitized solar cell module according to claim 2, wherein the dye-sensitized solar cell satisfies the relationship of the following formula:

$$0.001 < (1 / 2n) I_{sc} \cdot R \cdot \eta < 0.03$$

wherein $I_{sc}$ is a current [mA] generated at the time of short-circuit of one dye-sensitized solar cell, R is a resistance value ($\Omega$) per grid electrode (7) having an interdigital shape, $\eta$ is (area of porous semiconductor layer in one dye-sensitized solar cell) / (aperture area of one dye-sensitized solar cell), and n is the number of grid electrodes (7) having an interdigital shape included in one dye-sensitized solar cell.

**4.** The dye-sensitized solar cell module according to claim 3, wherein the length Ly of the grid electrode (7) having an interdigital shape is in a range of 2 cm to 10 cm.

**5.** The dye-sensitized solar cell module according to claim 3, wherein the distance (disposing cycle) LX between grid electrodes (7) having an interdigital shape is in a range of 0.4 cm to 1.5 cm.

**6.** The dye-sensitized solar cell module according to claim 3, wherein the width W of the grid electrode (7) having an interdigital shape is in a range of 0.1 mm to 1 mm.

**7.** A method for producing a dye-sensitized solar cell module according to Claim 1, the method comprising the steps of:

forming, for each dye-sensitized solar cell, a transparent conductive layer (2) on a light transmitting substrate (1);
forming, for each dye-sensitized solar cell, a grid electrode (7) on the transparent conductive layer (2);
forming, for each dye-sensitized solar cell, a porous semiconductor layer on the transparent conductive layer (2) on which the grid electrode (7) has been formed;
forming an inter-cell insulating layer (9) for electrically insulating neighboring dye-sensitized solar cells on the transparent conductive layer (2) on which the grid electrode (7) and the porous semiconductor layer have been formed;
forming, for each dye-sensitized solar cell, a counter electrode (5, 6) on the porous semiconductor layer;
forming a connection layer (8) for connecting the grid electrode (7) of one dye-sensitized solar cell and the counter electrode of its neighboring dye-sensitized solar cell in series;
adsorbing a dye in the porous semiconductor layer of each dye-sensitized solar cell,; and
filling the porous semiconductor layer of each dye-sensitized solar cell and pores thereof with a carrier transporting material; wherein
the photoelectric conversion layer (3) is sandwiched between the transparent conductive layer (2) together with the grid electrode (7) and the counter electrode (5, 6).

## Patentansprüche

**1.** Farbstoffsensibilisiertes Solarzellenmodul, umfassend:

zumindest zwei farbstoffsensibilisierte Solarzellen, die jeweils gebildet werden, indem auf einem lichtdurchlässigen Substrat (1) eine transparente leitfähige Schicht (2), die auf dem lichtdurchlässigen Substrat (1) ausgebildet

ist, eine Gitterelektrode (7), die auf der transparenten leitfähigen Schicht (2) ausgebildet ist, eine photoelektrische Umwandlungsschicht (3), in der ein Farbstoff in einer porösen Halbleiterschicht adsorbiert ist und die poröse Halbleiterschicht mit einem Träger transportierenden Material gefüllt ist, und eine Gegenelektrode (5, 6) geschichtet werden, wobei
die photoelektrische Umwandlungsschicht (3) sandwichartig zwischen der transparenten leitfähigen Schicht (2) zusammen mit der Gitterelektrode (7) und der Gegenelektrode (5, 6) angeordnet ist,
die zumindest zwei farbstoffsensibilisierten Solarzellen auf dem gleichen lichtdurchlässigen Substrat (1) über eine Zwischenzellen-Isolierschicht (9) angeordnet sind, und
die Gitterelektrode (7) einer farbstoffsensibilisierten Solarzelle und die Gegenelektrode (5, 6) ihrer benachbarten farbstoffsensibilisierten Solarzelle über eine Verbindungsschicht (8) in Reihe geschaltet sind.

**2.** Farbstoffsensibilisiertes Solarzellenmodul nach Anspruch 1, wobei die Gitterelektrode (7) eine fingerartig ineinandergreifende Form hat, die von der Verbindungsschicht (8) ausgeht.

**3.** Farbstoffsensibilisiertes Solarzellenmodul nach Anspruch 2, wobei die farbstoffsensibilisierte Solarzelle die Beziehung der folgenden Formel erfüllt:

$$0{,}001 < (1 / 2n)\, I_{sc} \cdot R \cdot \eta < 0{,}03$$

wobei $I_{sc}$ ein Strom [mA] ist, der zur Zeit eines Kurzschlusses einer farbstoffsensibilisierten Solarzelle erzeugt wird, R ein Widerstandswert [Ω] pro Gitterelektrode (7) mit einer fingerartig ineinandergreifenden Form ist, η (Fläche einer porösen Halbleiterschicht in einer farbstoffsensibilisierten Solarzelle) / (Aperturfläche einer farbstoffsensibilisierten Solarzelle) ist und n die Anzahl von Gitterelektroden (7) mit einer fingerartig ineinandergreifenden Form ist, die in einer farbstoffsensibilisierten Solarzellen enthalten sind.

**4.** Farbstoffsensibilisiertes Solarzellenmodul nach Anspruch 3, wobei die Länge Ly der Gitterelektrode (7) mit einer fingerartig ineinandergreifenden Form in einem Bereich von 2 cm bis 10 cm liegt.

**5.** Farbstoffsensibilisiertes Solarzellenmodul nach Anspruch 3, wobei die Distanz (Anordnungszyklus) LX zwischen Gitterelektroden (7) mit einer fingerartig ineinandergreifenden Form in einem Bereich von 0,4 cm bis 1,5 cm liegt.

**6.** Farbstoffsensibilisiertes Solarzellenmodul nach Anspruch 3, wobei die Breite W der Gitterelektrode (7) mit einer fingerartig ineinandergreifenden Form in einem Bereich von 0,1 mm bis 1 mm liegt.

**7.** Verfahren zum Herstellen eines farbstoffsensibilisierten Solarzellenmoduls nach Anspruch 1, wobei das Verfahren die Schritte umfasst:

Ausbilden, für jede farbstoffsensibilisierte Solarzelle, einer transparenten leitfähigen Schicht (2) auf einem lichtdurchlässigen Substrat (1);
Ausbilden, für jede farbstoffsensibilisierte Solarzelle, einer Gitterelektrode (7) auf der transparenten leitfähigen Schicht (2);
Ausbilden, für jede farbstoffsensibilisierte Solarzelle, einer porösen Halbleiterschicht auf der transparenten leitfähigen Schicht (2), auf der die Gitterelektrode (7) gebildet wurde,
Ausbilden einer Zwischenzellen-Isolierschicht (9), um benachbarte farbstoffsensibilisierte Solarzellen auf der transparenten leitfähigen Schicht (2) elektrisch zu isolieren, auf der die Gitterelektrode (7) und die poröse Halbleiterschicht gebildet wurden;
Ausbilden, für jede farbstoffsensibilisierte Solarzelle, einer Gegenelektrode (5, 6) auf der porösen Halbleiterschicht;
Ausbilden einer Verbindungsschicht (8), um die Gitterelektrode (7) einer farbstoffsensibilisierten Solarzelle und die Gegenelektrode ihrer benachbarten farbstoffsensibilisierten Solarzelle in Reihe zu schalten;
Adsorbieren eines Farbstoffs in der porösen Halbleiterschicht jeder farbstoffsensibilisierten Solarzellen; und
Füllen der porösen Halbleiterschicht jeder farbstoffsensibilisierten Solarzelle und deren Poren mit einem Träger transportierenden Material; wobei
die photoelektrische Umwandlungsschicht (3) sandwichartig zwischen der transparenten leitfähigen Schicht (2) zusammen mit der Gitterelektrode (7) und der Gegenelektrode (5, 6) angeordnet ist.

## Revendications

1. Module de cellule solaire à colorant photosensible, comprenant :

   au moins deux cellules solaires à colorant photosensible formées chacune par l'application, sur un substrat transmetteur de lumière (1), d'une couche conductrice transparente (2) formée sur ledit substrat transmetteur de lumière (1), d'une grille-électrode (7) formée sur la couche conductrice transparente (2), d'une couche de conversion photoélectrique (3) dans laquelle un colorant est adsorbé dans une couche semi-conductrice poreuse et ladite couche semi-conductrice poreuse est chargée avec un matériau de transporteur de porteur, et d'une contre-électrode (5, 6),
   la couche de conversion photoélectrique (3) étant placée en sandwich entre la couche conductrice transparente (2) avec la grille-électrode (7), et la contre-électrode (5, 6),
   les deux, au moins, cellules solaires à colorant photosensible étant disposées sur le même substrat transmetteur de lumière (1) par l'intermédiaire d'une couche isolante inter-cellules (9), et
   la grille-électrode (7) d'une cellule solaire à colorant photosensible et la contre-électrode (5, 6) de la cellule solaire à colorant photosensible voisine étant montées en série par l'intermédiaire d'une couche de connexion (8).

2. Module de cellules solaires à colorant photosensible selon la revendication 1, dans lequel la grille-électrode (7) a une forme interdigitée qui s'étend à partir de la couche de connexion (8).

3. Module de cellules solaires à colorant photosensible selon la revendication 2, dans lequel la cellule solaire à colorant photosensible satisfait à la relation de la formule suivante :

$$0{,}001 < (1/2n) I_{sc} \cdot R \cdot \eta < 0{,}03$$

   dans laquelle $I_{sc}$ désigne un courant [mA] généré au moment du court-circuit d'une cellule solaire à colorant photosensible, R une valeur de résistance (Ω) par grille-électrode (7) présentant une forme interdigitée, η (la superficie de la couche semi-conductrice poreuse dans une cellule solaire à colorant photosensible) / (la superficie d'ouverture d'une cellule solaire à colorant photosensible), et n le nombre de grilles-électrodes (7) présentant une forme interdigitée contenue dans une cellule solaire à colorant photosensible.

4. Module de cellules solaires à colorant photosensible selon la revendication 3, dans lequel la longueur Ly de la grille-électrode (7) présentant une forme interdigitée est située dans une plage de 2 cm à 10 cm.

5. Module de cellules solaires à colorant photosensible selon la revendication 3, dans lequel la distance (cycle de disposition) LX entre les grilles-électrodes (7) présentant une forme interdigitée est située dans une plage de 0,4 cm à 1,5 cm.

6. Module de cellules solaires à colorant photosensible selon la revendication 3, dans lequel la largeur W de la grille électrode (7) présentant une forme interdigitée est située dans une plage de 0,1 mm à 1 mm.

7. Procédé pour produire un module de cellules solaires à colorant photosensible selon la revendication 1, le procédé comprenant les étapes :

   de formation, pour chaque cellule solaire à colorant photosensible, d'une couche conductrice transparente (2) sur un substrat transmetteur de lumière (1) ;
   de formation, pour chaque cellule solaire à colorant photosensible, d'une grille-électrode (7) sur la couche conductrice transparente (2) ;
   de formation, pour chaque cellule solaire à colorant photosensible, d'une couche semi-conductrice poreuse sur la couche conductrice transparente (2) sur laquelle la grille-électrode (7) a été formée ;
   de formation d'une couche isolante inter-cellules (9) pour isoler électriquement des cellules solaires à colorant photosensible voisines sur la couche conductrice transparente (2) sur laquelle la grille-électrode (7) et la couche semi-conductrice poreuse ont été formées ;
   de formation, pour chaque cellule solaire à colorant photosensible, d'une contre-électrode (5, 6) sur la couche semi-conductrice poreuse ;

de formation d'une couche de connexion (8) pour monter en série la grille-électrode (7) d'une cellule solaire à colorant photosensible et la contre-électrode de la cellule solaire à colorant photosensible voisine ;
d'adsorption d'un colorant dans la couche semi-conductrice poreuse de chaque cellule solaire à colorant photosensible ; et
la charge de la couche semi-conductrice poreuse de chaque cellule solaire à colorant photosensible et de ses pores avec un matériau de transporteur de porteur ;
la couche de conversion photoélectrique (3) étant placée en sandwich entre la couche conductrice transparente (2) avec la grille-électrode (7), et la contre-électrode (5, 6).

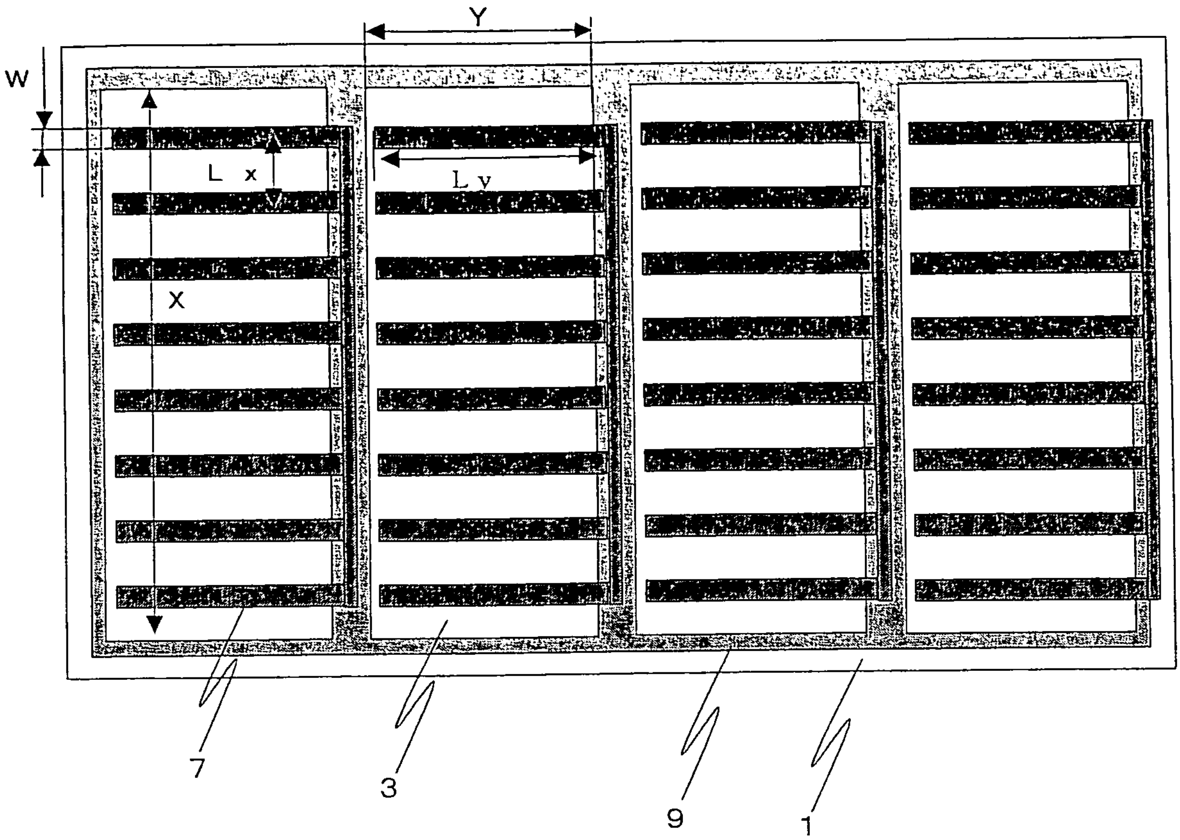


FIG. 1 (a)

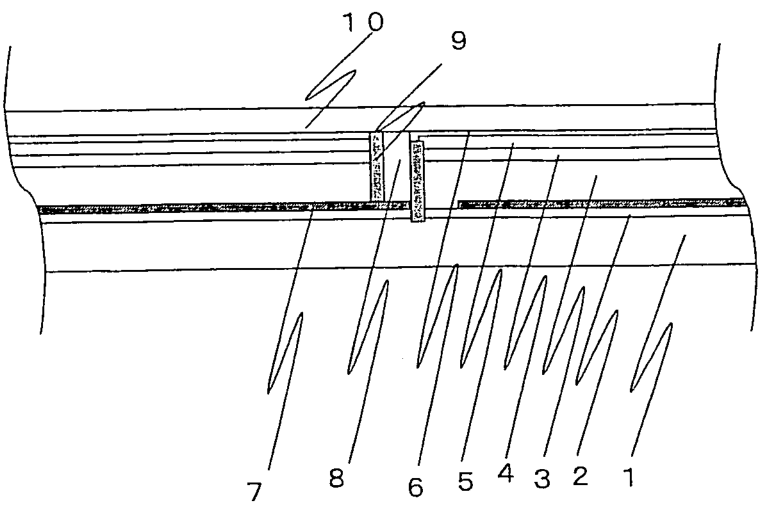


FIG. 1 (b)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2664194 B
- JP HEI111999514787 B
- JP 2001357897 A
- JP 2000285977 A
- GB 100654103 B1